# EUROPÄISCHE PATENTANMELDUNG

(11) **EP 4 362 303 A1**
(43) Veröffentlichungstag der Anmeldung: **01.05.2024**
(21) Anmeldenummer: 23205625.9
(22) Anmeldetag: 24.10.2023
(51) Int. Cl.: H02M 1/10, H02M 7/5387, H02M 3/158, H02M 1/00, H02M 7/797

(54) **WANDLERSYSTEM UND FAHRZEUG MIT WANDLERSYSTEM**

(30) Priorität: 25.10.2022 DE 102022128129
(71) Anmelder: AVL Software And Functions GmbH, 93059 Regensburg (DE)
(72) Erfinder: Deiml, Mathias, 93059 Regensburg (DE); Schneck, Matthias, 93059 Regensburg (DE)
(74) Vertreter: Hannke, Christian

(57) **Zusammenfassung**

Die Erfindung betrifft ein Wandlersystem mit einem Wandler, an welchem ein Brennstoffzellensystem, ein Batteriesystem und ein Netzsystem angeschlossen ist, wobei der Wandler dazu vorgesehen und ausgebildet ist, eine Gleichspannung des Brennstoffzellensystems oder die Gleichspannung des Brennstoffzellensystems und des Batteriesystems in eine Wechselspannung des Netzsystem zu wandeln, wobei die Gleichspannung des Brennstoffzellensystems zum Laden des Batteriesystems zu wandeln.

## Beschreibung

Die vorliegende Anmeldung betrifft ein Wandlersystem mit einem Wandler sowie ein Fahrzeug mit einem entsprechenden Wandlersystem.

Aus dem Stand der Technik sind Wandlersysteme mit Wandlern derart bekannt, dass für jede Wandlungsoperation hinsichtlich der Wandlung zwischen Gleichspannung und Wechselspannung oder zwischen einer Hochvoltgleichspannung und einer Niedervoltgleichspannung jeweils separate Wandler benötigt werden.

Das Vorsehen von mehreren Wandlern zum Wandeln der entsprechenden Spannungen geht einher mit einem erhöhten Gewicht sowie mit einem erhöhten Platzbedarf. Beides ist insbesondere bei der Anwendung in einem Fahrzeug, beispielweise einem Flugzeug, nachteilig.

Aufgabe der zugrunde liegenden Anmeldung ist es daher, ein Wandlersystem bereitzustellen, mittels welchem die Anzahl der Wandler reduziert werden kann, um eine Ersparnis hinsichtlich des Gewichts und hinsichtlich des Platzbedarfes erreichen zu können.

Die zugrunde liegende Aufgabe wird einerseits gelöst mittels eines Wandlersystems gemäß dem Anspruch 1 und einem Fahrzeug mit einem Wandlersystem gemäß dem Anspruch 15.

Kerngedanke der Erfindung ist es, ein Wandlersystem mit einem Wandler bereitzustellen, an welchem einerseits ein Brennstoffzellensystem, ein Batteriesystem und ein Netzsystem angeschlossen sind, wobei der Wandler dazu vorgesehen und ausgebildet ist,
- eine Gleichspannung des Brennstoffzellensystems oder die Gleichspannung des Brennstoffzellensystems und des Batteriesystems in eine Wechselspannung des Netzsystem oder die Gleichspannung des Brennstoffzellensystems und des Batteriesystems in eine Wechselspannung des Netzsystem zu wandeln,
- die Gleichspannung des Brennstoffzellensystems zum Laden des Batteriesystems zu wandeln.

Erfindungsgemäß ist es daher vorgesehen, einen Wandler bereitzustellen, mittels welchem sowohl eine Gleichspannung in eine Wechselspannung gerichtet werden kann und andererseits eine Niederspannung des Brennstoffzellensystems in eine Hochvoltspannung zum Laden des Batteriesystems zu wandeln.

Weiter bevorzugt ist es vorgesehen, dass genau ein Wandler vorgesehen ist, welche in dem Wandlersystem angeordnet ist. Dies bedeutet, dass der einzige Wandler die benötigten Operationen alleinig durchführen kann.

Dadurch, dass der Wandler dazu vorgesehen ist, die benötigten Operationen durchzuführen, kann auf mehrere verschiedene Wandler verzichtet werden, um Gewicht und Raum einsparen zu können.

Gemäß einer besonders bevorzugten Ausführungsform ist es vorgesehen, dass der Wandler ein high-side Potential und ein low-side Potential umfasst. Alternativ kann das high-side Potential auch als positive Rail-Spannung und das low-side Potential als negative Rail-Spannung bezeichnet werden. Weiter alternativ kann das das high-side Potential als PlusPotential und das low-side Potential als Minus-Potential bezeichnet werden.

Dadurch, dass der Wandler ein high-side Potential beziehungsweise ein low-side Potential aufweist, welche jeweils durch eine entsprechende Leitung realisiert werden kann, können sich entsprechende Bauteile des Wandlers beziehungsweise zwischen dem Wandler und den jeweiligen weiteren Bauteilen, beispielweise dem Brennstoffzellensystem, dem Batteriesystem und dem Netzsystem auf diese Potentiale bezogen werden.

Gemäß einer weiteren bevorzugten Ausführungsform ist es vorgesehen, dass das Brennstoffzellensystem und das Batteriesystem mit dem low-side Potential des Wandlers verbunden sind. Alternativ kann es vorgesehen sein, dass das Brennstoffzellensystem von dem low-side Potential abgekoppelt ist und ein separates low-side Potential aufweisen kann. Der Wandler bzw. das Wandlersystem kann hierdurch kompakt gebaut und realisiert werden.

Dies trifft insbesondere gemäß einer besonderen Ausführungsform zu, wenn zwischen dem Brennstoffzellensystem und dem Wandler eine galvanische Trennung implementiert ist. Die galvanische Trennung kann dazu dienen, einen Stromfluss von dem Wandler zu dem Brennstoffzellensystem effektiv zu verhindern. Besonders bevorzugt umfasst die galvanische Trennung einen Resonanzwandler.

Gemäß dem Fall, dass das Brennstoffzellensystem und das Batteriesystem mit dem low-side Potential des Wandlers verbunden sind, kann durch eine gewisse Ausgestaltung des Wandlers und eine mögliche Ansteuerung des Wandlers effektiv ein Stromfluss ausgehend vom Wandler zu dem Brennstoffzellensystem effektiv verhindert werden. Dies wird insbesondere mit der nachfolgenden Beschreibung klarer dargestellt.

Gemäß einer weiteren bevorzugten Ausführungsform ist es vorgesehen, dass der Wandler zumindest fünf Halbbrücken umfasst. Weiter bevorzugt umfasst jede der Halbbrücken zwei Schaltelemente. Es sind daher eine erste Halbbrücke, eine zweite Halbbrücke, eine dritte Halbbrücke, eine vierte Halbbrücke und eine fünfte Halbbrücke des Wandlers vorgesehen. Besonders bevorzugt ist jede der Halbbrücken zwischen dem high-side Potential und dem low-side Potential angeordnet, das heißt, dass jede Halbbrücke einerseits mit dem high-side Potential und andererseits mit dem low-side Potential verbunden ist, insbesondere elektrisch verbunden ist.

Weiter bevorzugt ist es vorgesehen, dass die erste Halbbrücke, die zweite Halbbrücke und die dritte Halbbrücke einen Inverter zum Wandeln der Gleichspannung in die Wechselspannung bilden. Die Wechselspannung kann dem Netzsystem bereitgestellt werden. Weiter bevorzugt ist die vierte Halbbrücke mit dem Brennstoffzellensystem und die fünfte Halbbrücke mit dem Batteriesystem verbunden.

Ein Schaltelement kann dabei als ein MOSFET oder als ein IGBT ausgebildet sein. Ebenso sind auch weitere Ausführungen hinsichtlich der Schaltelemente denkbar.

Besonders bevorzugt sind die zwei Schaltelemente jeder Brücke gleichartig. Weiter bevorzugt sind alle Schaltelemente der Halbbrücken gleichartig zueinander.

Mittels eines Vorsehens von zumindest fünf Halbbrücken und der entsprechenden Verbindung zu dem Brennstoffzellensystem, dem Batteriesystem und dem Netzsystem kann eine besonders einfache Ausgestaltung des Wandlers bereitgestellt werden.

Gemäß einer weiteren bevorzugten Ausführungsform ist es vorgesehen, dass die erste Halbbrücke mit einem ersten Phasenausgang, die zweite Halbbrücke mit einem zweiten Phasenausgang und die dritte Halbbrücke mit einem drittem Phasenausgang der Wechselspannung verbunden sind.

Dies bedeutet, dass jede Phase der Netzwechselspannung mit einer Halbbrücke des Inverters verbunden ist.

Gemäß einer weiterführenden Ausführungsform ist es vorgesehen, dass der Wandler eine sechste Halbbrücke umfassend zwei Schaltelemente aufweist. Bevorzugt ist die sechste Halbbrücke mit einem Gleichspannungsausgang verbunden. An diesem Gleichspannungsausgang können weitere Verbraucher angeschlossen werden, welche eine Gleichspannung benötigen. Ebenso ist wie die weiteren Halbbrücken die sechste Halbbrücke zwischen dem high-side Potential und dem low-side Potential angeordnet. Mögliche Verbraucher, welche an diesem Gleichspannungsausgang angeschlossen werden können, können beispielweise ein Belüftungssystem, ein Kühlsystem oder ein weiters Verbrauchersystem des Netzsystems, welche mit einer Gleichspannung betrieben werden, angeschlossen werden.

Besonders bevorzugt kann die Gleichspannung am Gleichspannungsausgang entweder mittels des Brennstoffzellensystems, des Batteriesystems oder durch beide dieser Systeme bereitgestellt werden.

Besonders ist dies bevorzugt, bereits vorhandene Gleichspannungsquellen zu verwenden, um auf weitere Gleichspannungsquellen verzichten zu können.

Gemäß einer weiteren bevorzugten Ausführungsform ist es vorgesehen, dass der Wandler zum Bereitstellen der Gleichspannung am Gleichspannungsausgang als ein Abwärtswandler betreibbar ist.

Hierzu können daher die relativ hohen Spannungen des Brennstoffzellensystems beziehungsweise des Batteriesystems auf die benötigte Spannung beziehungsweise Gleichspannung am Gleichspannungsausgang gewandelt werden.

Um die elektrischen Eigenschaften weiter verbessern zu können, ist es bevorzugt vorgesehen, dass zwischen der ersten Halbbrücke und dem ersten Phasenausgang eine erste Spule, zwischen der zweiten Halbbrücke und dem zweiten Phasenausgang eine zweite Spule und zwischen der dritten Halbbrücke und dem drittem Phasenausgang eine dritte Spule angeordnet ist.

Die Spulen haben bevorzugt die Wirkung von Filterdrosseln.

Um ebenso weiter die elektrischen Eigenschaften verbessern zu können, ist es gemäß einer weiteren bevorzugten Ausführungsform vorgesehen, dass zwischen der vierten Halbbrücke und dem Brennstoffzellensystem eine vierte Spule und zwischen der fünften Halbbrücke und dem Batteriesystem eine fünfte Spule angeordnet sind. Ebenso sind diese Spulen auch als Speicherdrosseln zu verstehen.

Weiter kann es zur Verbesserung der elektrischen Eigenschaften vorgesehen sein, dass zwischen high-side Potential und dem low-side Potential ein erster Kondensator angeordnet ist. Dieser Kondensator kann als Zwischenkreiskondensator angesehen werden, sodass auftretende Rippelströme durch das Schalten der jeweiligen Schaltelemente geglättet werden können. Weiterbevorzugt kann es vorgesehen sein, dass ein zweiter Kondensator zwischen dem high-side Potential und dem low-side Potential angeordnet ist.

Gemäß einer weiteren bevorzugten Ausführungsform kann es vorgesehen sein, dass der Wandler dazu ausgebildet und vorgesehen ist, eine Spannung zwischen dem high-side Potential des Wandlers und dem low-side Potential des Wandlers zu variieren. Eine Variation der Spannung des Wandlers zwischen den Potentialen kann in Abhängigkeit von der eingehenden Spannung des Brennstoffzellensystems und/oder des Batteriesystems angepasst werden, um so Beschädigungen an den jeweiligen Ausgängen und/oder Eingängen vermeiden zu können.

Ebenso ist es daher möglich, die Schaltelemente weniger zu belasten, um so die Lebensdauer des Wandlers erhöhen zu können.

Besonders bevorzugt handelt es sich hier bei dem Batteriesystem um eine Hochvoltbatterie. Es ist gemäß einer bevorzugten Ausführungsform daher vorgesehen, dass der Wandler beim Laden des Batteriesystems als ein Aufwärtswandler betreibbar ist. Dies ist notwendig, da die Ausgangsspannung des Brennstoffzellensystems unterhalb der Spannung des Batteriesystems liegt.

Um den Wandler beim Laden des Batteriesystems als einen Aufwärtswandler betreiben zu können, ist es insbesondere vorgesehen, dass ein dritter Kondensator vorgesehen ist, welcher mit dem Brennstoffzellensystem und der jeweiligen Erdung des Brennstoffzellensystems verbunden ist. Durch die bevorzugte Kombination der vierten Halbbrücke, der vierten Spule und dem dritten Kondensator kann eine Aufwärtswandlung effektiv durchgeführt werden.

Besonders bevorzugt kann auch das Batteriesystem in einem Aufwärtswandlermodus betrieben werden, sodass bevorzugt ebenso ein vierter Kondensator zwischen dem Batteriesystem und dem low-side Potential vorgesehen ist.

Zur Ansteuerung der Schaltelemente des Wandlers ist es gemäß einer bevorzugten Ausführungsform vorgesehen, dass das Wandlersystem bzw. der Wandler mit einer Steuereinheit verbunden ist. Besonders bevorzugt ist die Steuereinheit dazu vorgesehen und ausgebildet, den Wandler zu steuern, um die Spannungen des Brennstoffzellensystems oder des Brennstoffzellensystems und des Batteriesystems entsprechend wandeln zu können.

Besonders bevorzugt kann die Steuereinheit mit dem Wandler mittels einer optischen Schnittstelle verbunden sein, beispielsweise durch eine Glasfaserverbindung oder dergleichen. Mittels einer optischen Schnittstelle kann eine hohe Bandbreite zur Übertragung der entsprechenden Daten von der Steuereinheit an den Wandler übertragen werden. Ebenso ist durch die räumliche Nähe ausgeschlossen, dass durch hohe magnetische Felder und Schaltvorgänge die Ansteuerung beeinträchtigt werden kann.

Besonders bevorzugt ist die Steuerung des Wandlers derart, dass eine FPGA (Field Programmable Gate Array) Steuerung in der Steuereinheit hinterlegt ist, um die jeweiligen Steuerelemente des Wandlers einzeln oder in Kombination entsprechend ansteuern zu können.

Weiter wird die zugrunde liegende Aufgabe mittels eines Fahrzeugs mit einem Wandlersystem nach einer der bevorzugten Ausführungsformen gelöst. Bevorzugt handelt es sich bei dem Fahrzeug um ein Wasserfahrzeug, ein Flurförderfahrzeug, ein Nutzfahrzeug, ein Automobil, ein Flugzeug oder dergleichen.

Die verschiedenen Ausführungsformen mit all ihren Merkmalen sind dabei beliebig kombinierbar und austauschbar.

Weitere vorteilhaftige Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen.

Hierbei zeigen:
- Fig. 1: ein Wandlersystem gemäß einer bevorzugten Ausführungsform;
- Fig. 2: das Wandlersystem mit einer galvanischen Trennung;
- Fig. 3: schematisch ein Fahrzeug mit einem Wandlersystem.

In den Figuren sind gleiche Bauteile jeweils mit dem entsprechenden Bezugszeichen zu verstehen. Zur verbesserten Übersichtlichkeit können manche Figurenbauteile nicht mit einem Bezugszeichen versehen sein, die jedoch an anderer Stelle bezeichnet worden sind.

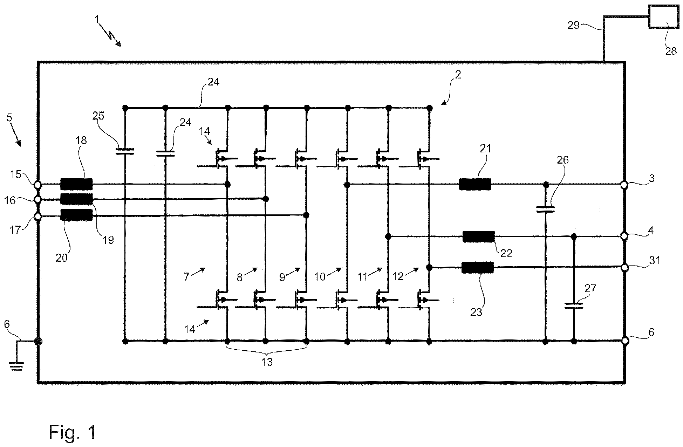

In der Figur 1 ist ein Wandlersystem 1 mit einem Wandler 2 dargestellt, wobei der Wandler 2 mit einem Brennstoffzellensystem 3, einem Batteriesystem 4 und mit einem Netzsystem 5 verbunden ist. Die Verbindung des Brennstoffzellensystems 3 und des Batteriesystems 4 sind dabei derart, dass ein Leiter an einem Eingang eingeht und der andere Leiter mit einem low-side Potential DC- verbunden ist. Weiter umfasst das Wandlersystem 1 ein erstes Gehäuse 34, welches mit einer Erdung 6 verbunden ist.

Es ist dabei vorgesehen, dass sowohl das Brennstoffzellensystem 3 und das Batteriesystem 4 mit dem low-side Potential DC- verbunden sind. Das low-side Potential DC- stellt daher eine gemeinsame leitende Verbindung für die Elemente des Wandlersystems 1 dar.

Das Brennstoffzellensystem 3 sowie das Batteriesystem 4 geben eine Gleichspannung (DC-Spannung) aus. Dadurch, dass das Brennstoffzellensystem 3 und das Batteriesystem 4 mittels einer Verbindungsleitung mit dem low-side Potential DC- verbunden sind, ist die weitere Leitung mit dem Wandler 2 des Wandlersystems 1 verbunden.

Im nachfolgenden wird der Aufbau des Wandlers 2 genauer dargestellt.

Der Wandler 2 ist dabei derart ausgestaltet, dass der Wandler 2 dazu ausgebildet und vorgesehen ist, eine Gleichspannung des Brennstoffzellensystems 3 oder die Gleichspannung des Brennstoffzellensystems 3 und des Batteriesystems 4 in eine Wechselspannung des Netzsystems 5 zu wandeln, sowie die Gleichspannung des Brennstoffzellensystems 3 zum Laden des Batteriesystems 4 zu wandeln.

Hierzu umfasst der Wandler 2 eine erste Halbbrücke 7, eine zweite Halbbrücke 8, eine dritte Halbbrücke 9, eine vierte Halbbrücke 10 sowie eine fünfte Halbbrücke 11. Jede dieser Halbbrücken 7, 8, 9, 10, 11 umfasst dabei zwei Schaltelemente 14, welche beispielweise als ein MOSFET oder ein IGBT oder dergleichen ausgebildet sein können. Die Halbbrücken 7, 8, 9, 10, 11 sind dabei einerseits mit einem high-side Potential DC+ und andererseits mit einem low-side Potential DC- verbunden. Die Verbindung zwischen dem Brennstoffzellensystem 3 und dem Wandler ist dabei derart, dass ein Schaltelement 14 jeder Halbbrücke 7, 8, 9, 10, 11 auf der high-side Seite angeordnet ist und das weitere Schaltelement 14 auf der low-side Seite. Elektrisch gesehen bedeutet dies, dass die Verbindung des Brennstoffzellensystems 3 zwischen den Schaltelementen 14 einer jeden Halbbrücke 7, 8, 9, 10, 11 angeordnet ist. Dabei ist es vorgesehen, dass das Brennstoffzellensystem 3 mit seinem einen Eingang mit der vierten Halbbrücke 10 verbunden ist. Die erste Halbbrücke 7, die zweite Halbbrücke 8 und die dritte Halbbrücke 9 sind dabei jeweils mit einem Phasenausgang 15, 16, 17 verbunden, wobei die Gesamtheit aus erster Halbbrücke 7, zweiter Halbbrücke 8 und dritter Halbbrücke 9 einen Inverter 13 ausbilden. Die erste Halbbrücke 7 ist dabei mit einem ersten Phasenausgang 15, die zweite Halbbrücke 8 mit einem zweiten Phasenausgang 16 und die dritte Halbbrücke 9 mit einem dritten Phasenausgang 17 des Netzsystems 5 verbunden.

Zur Verbesserung der elektrischen Eigenschaften sind zwischen der ersten Halbbrücke 7 und dem ersten Phasenausgang 15 eine erste Spule 18, zwischen der zweiten Halbbrücke 8 und dem zweiten Phasenausgang 16 eine zweite Spule 19 und zwischen der dritten Halbbrücke 9 und dem dritten Phasenausgang 17 eine dritte Spule 20 angeordnet. Diese Spulen 18, 19, 20 können als sogenannte Drosselspulen verwendet werden.

Weiter ist es vorgesehen, dass ein erster Kondensator 24 und ein zweiter Kondensator 25 vorgesehen sind, welche einerseits mit dem high-side Potential DC+ und andererseits mit dem low-side Potential DC- verbunden sind und somit als Zwischenkreiskondensatoren dienen können. Durch die Kondensatoren 24, 25 ist es daher möglich, die auftretenden Rippelspannungen durch Schaltvorgänge der Halbbrücken 7, 8, 9, 10, 11, 12 zu minimieren.

Darüber hinaus ist eine sechste Halbbrücke 12 vorgesehen, welche ebenso wie die weiteren Halbbrücken 7, 8, 9, 10, 11 einerseits mit dem high-side Potential DC+ und andererseits mit dem low-side Potential DC- verbunden ist und ebenso zwei Schaltelemente 14 aufweist, wobei auch ein Schaltelement 14 auf der high-side Seite und ein zweites Schaltelement 14 auf der low-side Seite angeordnet ist. Des Weiteren ist die sechste Halbbrücke 12 mit einem Spannungsausgang 31 verbunden, wobei es sich bei dem Spannungsausgang 31 um einen Anschluss eines Geräts handelt, welches mit einer Gleichspannung betrieben wird. Ebenso ist die zweite Leitung hier ebenso mit dem low-side Potential DC- verbunden. Bisher wurde daher die Eigenschaft des Wandlersystem 1 mit dem Wandler 2 beschrieben, eine Gleichspannung des Brennstoffzellensystems 3 oder eine Gleichspannung des Brennstoffzellensystems 3 und eine Gleichspannung des Batteriesystems 4 in eine Wechselspannung des Netzsystems 5 zu wandeln.

Weiter bevorzugt ist es vorgesehen, dass zwischen der vierten Halbbrücke 10 und dem Brennstoffzellensystem 3 eine vierte Spule 21 angeordnet ist. Ebenso bevorzugt ist es vorgesehen, dass zwischen der fünften Halbbrücke 11 und dem Batteriesystem 4 eine fünfte Spule 22 angeordnet ist.

Ebenso bevorzugt ist zwischen der sechsten Halbbrücke 12 und dem Spannungsausgang 31 eine sechste Spule 23 vorgesehen. Diese Spulen dienen ebenso wie die bisherigen Spulen 18, 19, 20 als Drosselspulen.

Weiter bevorzugt ist es vorgesehen, dass zwischen Brennstoffzellensystem 3 und der zugehörigen Erdung 6 ein dritter Kondensator 26 angeordnet ist. Hinsichtlich des Batteriesystems 4 ist zwischen dem Batteriesystem 4 und dem gemeinsamen low-side Potential DC- ein vierter Kondensator 27 angeordnet. Je nach vorgesehener zu verwirklichender Möglichkeit ist daher für das Brennstoffzellensystem 3 beziehungsweise für das Batteriesystem 4 eine Hochsetz- beziehungsweise Tiefsetz- (Boost oder Buck) Verwendung möglich.

Ein unerwünschter Stromfluss in das Brennstoffzellensystem 3 hinein kann effektiv durch den auf der high-side Seite angeordneten Schaltelement 14 verhindert werden. Alternativ beziehungsweise kumulativ wäre es möglich, zwischen der vierten Halbbrücke 10 und dem Brennstoffzellensystem 3 ein redundantes Relais einzuarbeiten, welches dazu ausgebildet und vorgesehen ist, bei einer Fehlfunktion an der high-side Seite zu öffnen, um den Stromfluss in das Brennstoffzellensystem 3 hinein zu unterbrechen.

Weiter ist eine Steuereinheit 28 vorgesehen, welche mittels einer optischen Verbindung 29 mit dem Wandlersystem 1 beziehungsweise dem Wandler 2 verbunden ist. Die Steuereinheit 28 ist dazu vorgesehen und ausgebildet, den Wandler 2 zu steuern, um die Spannungen des Brennstoffzellensystems 3 oder des Brennstoffzellensystems 3 und des Batteriesystems 4 zu wandeln. Daher ist die Steuereinheit 28 dazu vorgesehen, die jeweiligen Schaltelemente 14 der Halbbrücken 7, 8, 9, 10, 11, 12 entsprechend den Anforderungen des Wandlersystems 1 anzusteuern.

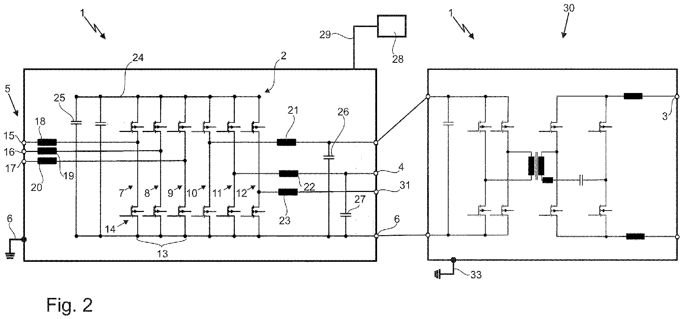

In der Figur 2 ist eine alternative beziehungsweise eine kumulative Ausgestaltung des Wandelsystems 1 gemäß der Figur 1 dargestellt, wobei zwischen dem Brennstoffzellensystem 3 und der entsprechenden vierten Halbbrücke 10 eine galvanische Trennung 30 implementiert ist. Die galvanische Trennung 30 kann beispielweise durch einen Resonanzwandler 32 ausgebildet sein. Auf der vierten Halbbrücke 10 zugewandten Seite des Resonanzwandlers 32 sind die Anschlüsse wie in Figur 1 dargestellt. Auf der Brennstoffzellensystem 3 zugewandten Seite ist ein separates low-side Potential 33 notwendig, da durch die galvanische Trennung 30 keine leitungstechnische Verbindung mehr vorgesehen ist.

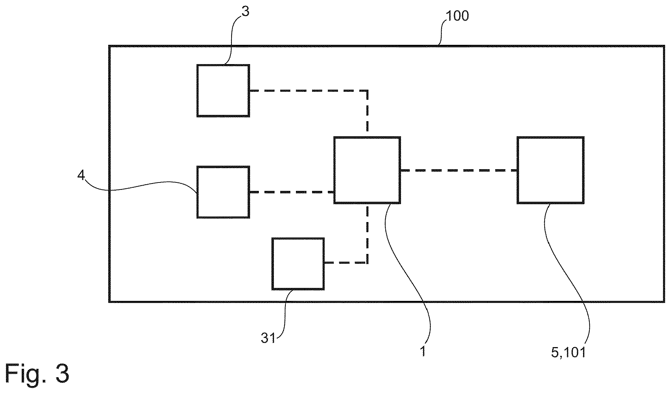

In der Figur 3 ist schemenhaft eine mögliche Anwendung des Wandlersystems 1 dargestellt, wobei das Wandlersystem 1 in einem Fahrzeug 100 angeordnet ist und mit einem Netzsystem, beispielsweise ein 3-Phasen-Netz, an welchem ein Verbraucher 101 angeordnet ist, verbunden ist. Denkbar wäre auch, dass das Netzsystem mit einem Elektromotor verbunden ist. Weiter sind schemenhaft noch die weiteren Elemente gezeigt, nämlich das Brennstoffzellensystem 3, das Batteriesystem 4 sowie die weiteren möglichen elektrischen Verbraucher, welche an dem Spannungsausgang 31 angeordnet werden können.

Sämtliche in den Anmeldeunterlagen offenbarten Merkmale werden als erfindungswesentlich beansprucht, sofern sie einzeln und in Kombination gegenüber dem Stand der Technik neu sind.

### Bezugszeichenliste

- 1: Wandlersystem
- 2: Wandler
- 3: Brennstoffzellensystem
- 4: Batteriesystem
- 5: Netzsystem
- 6: Erdung
- 7: erste Halbbrücke
- 8: zweite Halbbrücke
- 9: dritte Halbbrücke
- 10: vierte Halbbrücke
- 11: fünfte Halbbrücke
- 12: sechste Halbbrücke
- 13: Inverter
- 14: Schaltelement
- 15: erster Phasenausgang
- 16: zweiter Phasenausgang
- 17: dritter Phasenausgang
- 18: erste Spule
- 19: zweite Spule
- 20: dritte Spule
- 21: vierte Spule
- 22: fünfte Spule
- 23: sechste Spule
- 24: erster Kondensator
- 25: zweiter Kondensator
- 26: dritter Kondensator
- 27: vierter Kondensator
- 28: Steuereinheit
- 29: optische Verbindung
- 30: galvanische Trennung
- 31: Spannungsausgang
- 32: Resonanzwandler
- 33: separate Erdung
- 34: erstes Gehäuse
- 100: Fahrzeug
- 101: Verbraucher
- DC+: high-side Potential
- DC-: low-side Potential

## Patentansprüche

1. Wandlersystem (1) mit einem Wandler (2), an welchem einerseits ein Brennstoffzellensystem (3), ein Batteriesystem (4) und ein Netzsystem (5) angeschlossen ist, wobei der Wandler (2) dazu vorgesehen und ausgebildet ist,
- eine Gleichspannung des Brennstoffzellensystems (3) oder die Gleichspannung des Brennstoffzellensystems (3) und des Batteriesystems (4) in eine Wechselspannung des Netzsystem (5) zu wandeln,
- die Gleichspannung des Brennstoffzellensystems (3) zum Laden des Batteriesystems (4) zu wandeln.

2. Wandlersystem (1) nach Anspruch 1, wobei der Wandler (2) ein high-side Potential (DC+) und ein low-side Potential (DC-) umfasst.

3. Wandlersystem (1) nach Anspruch 2, wobei das Brennstoffzellensystem (3) und das Batteriesystem (4) mit dem low-side Potential (DC-) des Wandlers (2),verbunden sind.

4. Wandlersystem (1) nach einem der Ansprüche 1 bis 3, wobei der Wandler (2) fünf Halbbrücken umfasst, jeweils umfassend zwei Schaltelemente (14), wobei eine erste Halbbrücke (7), eine zweite Halbbrücke (8) und eine dritte Halbbrücke (9) einen Inverter (13) zum Wandeln der Gleichspannung in die Wechselspannung bilden, welcher mit dem Netzsystem (5) verbunden ist, und wobei eine vierte Halbbrücke (10) mit dem Brennstoffzellensystem (3) und eine fünfte Halbbrücke (11) mit dem Batteriesystem (4) verbunden ist.

5. Wandlersystem (1) nach Anspruch 4, wobei die erste Halbbrücke (7) mit einem ersten Phasenausgang (15), die zweite Halbbrücke (8) mit einem zweiten Phasenausgang (16) und die dritte Halbbrücke (9) mit einem dritten Phasenausgang (17) verbunden sind.

6. Wandlersystem (1) nach einem der Ansprüche 4 bis 5, wobei der Wandler (2) eine sechste Halbbrücke (12) umfassend zwei Schaltelemente (14) umfasst, wobei die sechste Halbbrücke (12) mit einem Gleichspannungsausgang (30) verbunden ist.

7. Wandlersystem (1) nach Anspruch 5, wobei zwischen der ersten Halbbrücke (7) und dem ersten Phasenausgang (15) eine erste Spule (18), zwischen der zweiten Halbbrücke (8) und dem zweiten Phasenausgang (16) eine zweite Spule (19) und zwischen der dritten Halbbrücke (9) und dem dritten Phasenausgang (17) eine dritte Spule (20) angeordnet ist.

8. Wandlersystem (1) nach einem der Ansprüche 4 bis 7, wobei zwischen der vierten Halbbrücke (10) und dem Brennstoffzellensystem (3) eine vierte Spule (21) und zwischen der fünften Halbbrücke (11) und dem Batteriesystem (4) eine fünfte Spule (22) angeordnet ist.

9. Wandlersystem (1) nach einem der Ansprüche 2 bis 3, wobei der Wandler (2) dazu ausgebildet und vorgesehen ist, eine Spannung zwischen high-side Potential (DC+) des Wandlers (2) und low-side Potential (DC-) des Wandlers (2) zu variieren.

10. Wandlersystem (1) nach Anspruch 9, wobei zwischen dem high-side Potential (DC+) und dem low-side Potential (DC-) ein erster Kondensator (24) angeordnet ist.

11. Wandlersystem (1) nach einem der Ansprüche 1 bis 10, wobei der Wandler (2) beim Laden des Batteriesystems (4) als ein Aufwärtswandler betreibbar ist.

12. Wandlersystem (1) nach Anspruch 6, wobei der Wandler (2) zum Bereitstellen einer Spannung am Gleichspannungsausgang (30) als ein Abwärtswandler betreibbar ist.

13. Wandlersystem (1) nach einem der Ansprüche 1 bis 12, wobei zwischen dem Brennstoffzellensystem (3) und dem Wandler (2) eine galvanische Trennung (30) implementiert ist.

14. Wandlersystem (1) nach einem der Ansprüche 1 bis 13, wobei das Wandlersystem (1) bzw. der Wandler (2) mit einer Steuereinheit (28) verbunden ist, wobei die Steuereinheit (28) dazu vorgesehen und ausgebildet ist, den Wandler (2) zu steuern, um die Spannungen des Brennstoffzellensystems (3) oder des Brennstoffzellensystems (3) und des Batteriesystems (4) zu wandeln.

15. Fahrzeug (100) mit einem Wandlersystem (1) nach einem der Ansprüche 1 bis 14.
